# EUROPEAN PATENT SPECIFICATION

(11) **EP 2 583 494 B1**
(45) Date of publication and mention of the grant of the patent: **06.02.2019**
(21) Application number: 10730739.9
(22) Date of filing: 18.06.2010
(51) Int. Cl.: G01S 5/02, H04W 24/10, H04W 16/18, H04W 64/00

(54) **CORRELATION OF COLLECTED MOBILE TERMINAL BASED MEASUREMENT DATA AND POSITIONING DATA**
KORRELATION VON DURCH EIN MOBILES ENDGERÄT ERHOBENEN MESSDATEN UND POSITIONIERUNGSDATEN
CORRÉLATION DE DONNÉES DE MESURE DE TERMINAL MOBILE ET DE DONNÉES DE POSITIONNEMENT COLLECTÉES

(43) Date of publication of application: 24.04.2013
(73) Proprietor: Nokia Solutions and Networks Oy, 02610 Espoo (FI)
(72) Inventor: BODOG, Gyula, H-1046 Budapest (HU); TOMALA, Malgorzata, PL-26-420 Nowe Miasto nad Pilica (PL)
(74) Representative: Nokia EPO representatives
(86) International application number: PCT/EP2010/058638
(87) International publication number: WO 2011/157301

(56) References cited:
- NOKIA SIEMENS NETWORKS: "UE selection related to Minimisation of Drive Test", 3GPP DRAFT; S5-101255 - UE SELECTION ASPECTS IN MDT, 3RD GENERATION PARTNERSHIP PROJECT (3GPP),, vol. SA WG5, 2 May 2010 (2010-05-02), pages 1-4, XP050440433, Montreal, Canada
- NTT DOCOMO, INC.: "3GPP TSG-RAN2 Meeting 70; R2-103292; LS on Location Information for MDT", 3GPP , 14 May 2010 (2010-05-14), page 1, XP002623439, Montreal, Canada Retrieved from the Internet: URL:http://www.3gpp.org/ftp/tsg_ran/WG2_RL 2/TSGR2_70/Docs/R2-103292.zip [retrieved on 2011-02-17]
- SHEDMAN TAM, ALCATEL-LUCENT: "MSF Whitepaper on Location Services in LTE Networks; MSF-TR-SERVICES-005-FINAL", MULTISERVICE FORUM, [Online] 1 April 2010 (2010-04-01), pages 1-19, XP002623440, MSFORUM Retrieved from the Internet: URL:http://www.msforum.org/techinfo/report s/MSF-TR-SERVICES-005-FINAL.pdf> [retrieved on 2011-02-17]
- HUAWEI: "MDT location control and correlation", 3GPP DRAFT; R2-103778 MDT LOCATION CONTROL AND CORRELATION, 3RD GENERATION PARTNERSHIP PROJECT (3GPP), vol. RAN WG2, 20 June 2010 (2010-06-20), XP050450957, Stockholm, Sweden

## Description

### Field of the Invention

The present invention relates to a mobile terminal, a trace collection entity, methods and a computer program product for correlation of collected mobile terminal based measurement data (e.g., data collected in minimization of drive tests (MDT)) and positioning data.

### Related background Art

The following meanings for the abbreviations used in this specification apply:
- 3GPP: 3^{rd} generation partnership project
- DM: Domain manager
- ECGI: E-UTRAN Cell Global Identifier
- EM: Element manager
- eNode-B: LTE base station (also referred to as eNB)
- E-SMLC: Evolved service mobile location centre
- E-UTRAN: Evolved universal terrestrial radio access
- GNSS: Global navigation satellite systems
- GPS: Global positioning system
- IMEI: International mobile equipment entity
- IMSI: International mobile subscriber identity
- LPP: LTE Positioning Protocol
- LTE: Long term evolution
- LTE-A: LTE-Advanced
- MSISDN: Mobile station integrated services data network
- MDT: Minimisation of drive test
- RF: Radio frequency
- RNC: Radio network controller
- RRC: Radio resource control
- SMLC: Service mobile location centre
- TR: Trace reference
- TRSR: Trace recording session reference
- UE: User equipment
- UMTS: Universal mobile telecommunications system

Embodiments of the present invention relate to the LTE and UMTS environment, more particularly to components such as user equipments (UE) and positioning servers such as evolved service mobile location centers (E-SMLC).

Moreover, embodiments relate to minimization of drive tests (MDT). In detail, drive tests are carried out on operator's need basis, when necessary, for example in order to optimize coverage in a network. In such drive tests, pre-configured UEs collect periodic and/or event triggered measurements and report them to the network. In order to reduce the number of drive tests, the above MDT is used.

The key information in measurements defined for minimization of drive tests (MDT) is terminal's physical location. Location information delivered together with radio signal measurements provides overall coverage picture of a network, where MDT sessions are scheduled. Thus, in 3GPP discussions on MDT feature Operators are pushing for accurate positioning information associated with MDT data. The current assumption in 3GPP RAN2 is that a best effort location information is used for MDT logs. Thus, the need for very accurate positioning is continuously requested by operators and becomes more urgent.

The main problem is that the best effort location information (ECGI, GNSS information, including from stand-alone GNSS receiver in the UE or RF fingerprints information i.e. measurement on serving/neighbor cells) is relying on non-guaranteed information that a UE and network can provide at the moment of MDT measurement. There can be cases when very accurate location information may not be provided, e.g. in cell edge area. Instead, rough estimation may be provided only. Lacking accurate location information associated with the MDT log will make the MDT feature less usable from Operator point of view.

"UE selection related to Minimisation of Drive Test", by Nokia Siemens Networks, 3GPP DRAFT; S5-101255 Montreal, Canada, 2 May 2010, proposes that a cell traffic trace functionality or a International Mobile Subscriber Identity/ International Mobile Equipment Identity can be used for data collection.

"LS on Location Information for MDT" by NTT DOCOMO, R2-103292, 3GPP , 14 May 2010, Montreal, Canada, is a document that mentions the need to further investigate the feasibility of core network nodes to be enabled for coordination between LCS sessions and MDT data collection.

In order to solve the problem, there are proposals to use a core network triggered positioning via the positioning server which triggers the UE to do positioning (via e.g. GPS capability).

The positioning data and the MDT data log then will be correlated in a post-processing system. However, the correlation can only be done based on certain timestamp. This raises a problem in that the time information might not be accurate, and also the correlation based on time stamp can be more power consuming.

### Summary of the Invention

Thus, it is an object of the present invention to overcome the above problem of the prior art.

The invention is set out in the appended set of claims.

Any embodiment, example or aspect referred to in the following description, which is not covered by the scope of the appended claims, is considered as not being part of the present invention.

According to an aspect of the present invention, this is accomplished by a mobile terminal and a method, by which a position request including a trace session identification parameter and a measurement configuration message is received, positioning of the mobile terminal is carried out and measurement data is collected in response to the received position request including the trace session identification parameter and in response to the received measurement configuration message respectively, and the measurement data and the positioning data both including the trace session identification parameter are sent.

According to a further aspect, a trace collection entity and a method are provided, in which positioning data comprising a trace session identification parameter, the positioning data including information about the position of a mobile terminal, and measurement data comprising the trace session identification parameter are received, and the positioning data is correlated with the measurement data based on the trace session identification parameter, wherein the positioning data is correlated with the measurement data by a comparison of the trace session identification parameter included in the measurement data with the trace session identification parameter included in the positioning data.

### Brief Description of the Drawings

These and other objects, features, details and advantages will become more fully apparent from the following detailed description of embodiments of the present invention which is to be taken in conjunction with the appended drawings, in which:
Fig. 1A to 1D show network elements involved in the processes according to the embodiments of the present invention.
Fig. 2 shows a signaling diagram according to an embodiment of the present invention;
Fig. 3 shows a signaling diagram according to a second embodiment of the present invention.

### Detailed Description of embodiments

In the following, description will be made to embodiments of the present invention. It is to be understood, however, that the description is given by way of example only, and that the described embodiments are by no means to be understood as limiting the present invention thereto.

According to several embodiments of the present invention, a way of coordinating UE data and position data is introduced in order to accurately correlate or associate the minimization drive test (MDT) measurements collected by the UE (and reported to O&M via eNB/RNC) and the position estimate reported by the UE (or position estimate calculated by the E-SMLC based on position measurement reported by the UE).

This is done through an extension of the trace functionality, as will be explained in the following. The E-SMLC manages the coordination for the location of a UE, interacts with the UE and calculates the final location. Trace activation is targeted to the positioning server for a certain IMEI(SV)/IMSI number or MSISDN. The UE will get the trace reference and trace recording session reference, which will report together with the positioning and MDT data. When the positioning data and the MDT data are forwarded to a centralized trace collection entity (TCE), the data correlation can be done easily using the trace reference and trace recording session reference parameters.

In more detail, during the trace activation the positioning server (e.g., SMLC or E-SMLC) gets the trace reference (TR), which identifies the trace session that is used also when MDT is configured to the UE.

When the positioning server initiates the positioning to the UE via e.g. the LPP protocol in E-UTRAN, it should send the trace reference and shall allocate a trace recording session reference for the positioning request.

The UE will get the trace reference and trace recording session reference which it should report together with the positioning data and also the MDT data.

Hence, as mentioned above, when the positioning data and the MDT data are forwarded to the centralized trace collection entity, the data correlation can be done easily using the trace reference and trace recording session reference parameters.

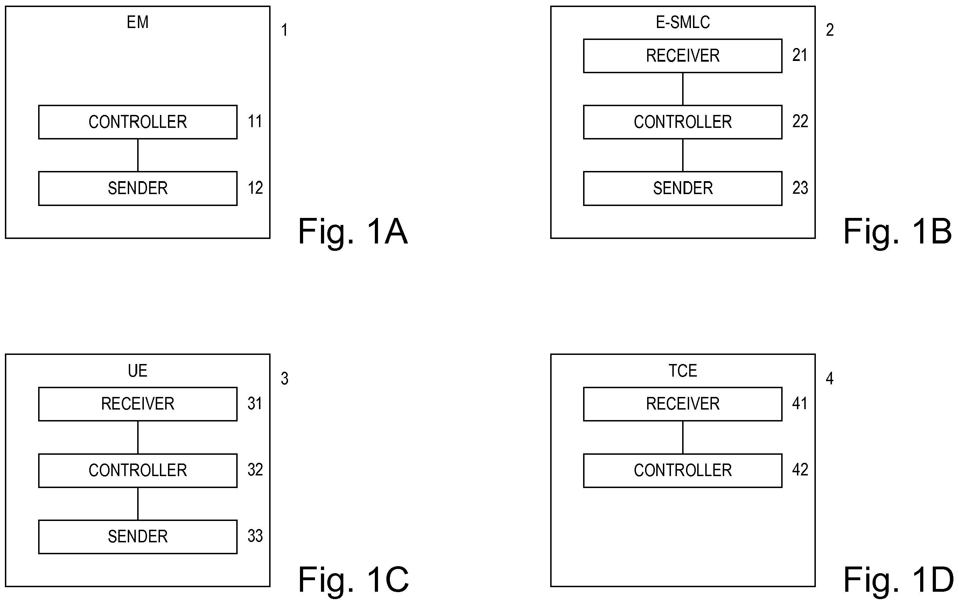

In the following, network elements involved are described by referring to Figs. 1A to 1D.

Fig. 1A shows an apparatus 1, which may be or may be part of a network control element configuring and managing performance measurements in a network. For example, such a network control element may be an element manager (EM) or a domain manager (DM). The apparatus (in this example, a element management (EM)) 1 comprises a controller 11 which generates a trace activation request for collecting measurement data (mobile terminal based measurement data, e.g., MDT as described above), and a sender 12 which sends the trace activation request including trace session identification parameter. The trace session identification parameter may be a trace reference (TR), for example.

Fig. 1B shows an apparatus 2, for example a positioning server (e.g., SMLC or E-SMLC, as described above) which comprises a receiver 21 which receives a trace activation request including a trace session identification parameter (e.g., trace reference (TR) as described above), a controller 22 configured to generate a position request for a user equipment (UE) as an example for a mobile terminal, and a sender 23 which sends the position request to the UE including the trace session identification parameter.

Fig. 1C shows an apparatus 3, which may be or may be included in a user equipment (UE), for example. The apparatus 3 comprises a receiver 31 which receives a position request including a trace session identification parameter (e.g., trace reference (TR) and/or trace recording session reference (TRSR) as described above), a controller 32 which performs positioning of the apparatus 3 and collects measurement data for measuring e.g. radio coverage of a network (MDT data as described above) in response to the received position request including the trace session identification parameter, and a sender 33 which sends the measurement data and positioning data including the measurement identification parameter.

Fig. 1D shows an apparatus 4, which may be or may be included in a trace collection entity (TCE). The apparatus 4 comprises a receiver 41 which receives position information data comprising a trace session identification parameter, the position information data including information about the position of a mobile terminal (e.g., user equipment (UE)) and measurement data (MDT data) comprising the trace session identification parameter, the measurement data comprising information about, e.g., the coverage of a network collected by UE, and a controller 42 which correlates the position information data with the measurement data (MDT data) based on the trace session identification parameter.

It is noted that according to the above examples, the apparatuses 1 and 4 are described as separate elements. However, alternatively the apparatuses 1 and 4 could also be combined to one single entity, since apparatuses 1 and 4 are both in the O&M domain. For example, both apparatuses 1 and 4 could be incorporated in suitable network management element for operation and maintenance (O&M or OAM).

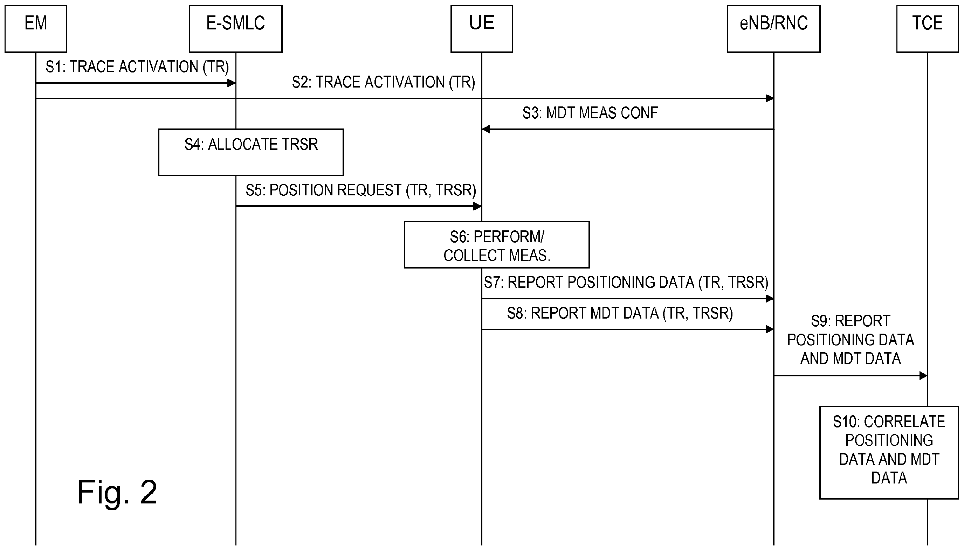

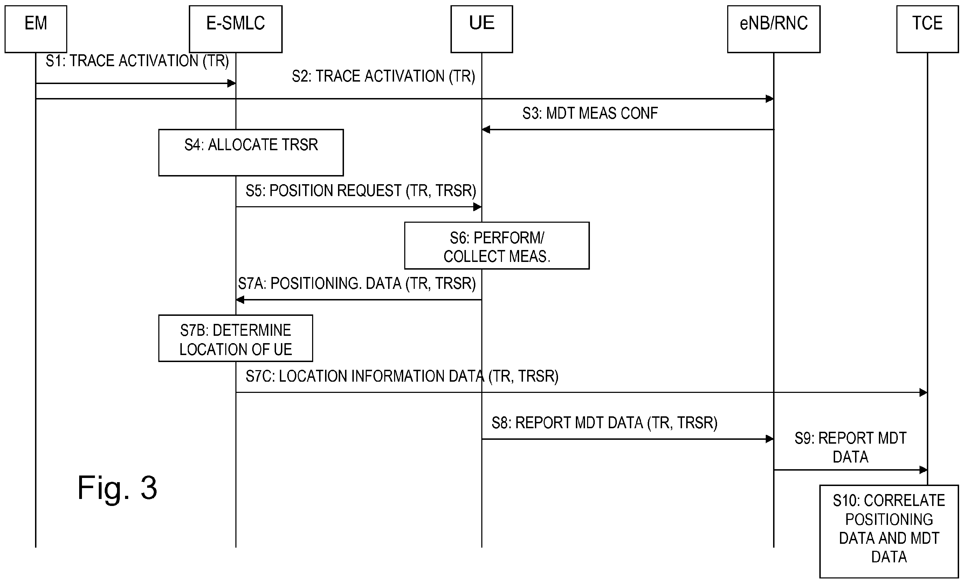

In the following, operations according to embodiments of the present invention are described in some more detail by referring to Figs. 2 and 3.

Fig. 2 shows a signalling diagram according to a first embodiment.

In process S1, a trace activation request including a trace reference (TR) is sent from a network management element (e.g., EM or the like) to a positioning server (SLMC or E-SLMC), as described above. In step S2, the trace activation request is forwarded to eNB/RNC, which then forwards MDT measurement configuration to the UE in step S3. It is noted that the timely order of processes S1 and S2 could be vice versa, or both processes could be carried out at the same time. In step S4, the E-SLMC establishes a position request for the user equipment (UE) and allocates a trace recording session reference (TRSR) for the positioning request. In process S5, the E-SMLC sends the position request including both TR and TRSR to the user equipment (UE). The UE may be determined based on an IMEI(SV)/IMSI number or MSISDN, as described above.

In process S6, the UE performs measurements, i.e., collects MDT data and the like and also collects positioning data. In process S7, the UE reports to the eNB/RNC the positioning data, and in process S8, the UE reports MDT data to eNB/RNC.

In process S9 eNB/RNC forwards the positioning data and the MDT data to the centralized trace collection entity (TCE). It is noted that in process S9, the positioning data and the MDT data may be sent separately from the eNB/RNC to the TCE. The reports as sent in processes S7, S8 and S9 contain TR and TRSR. It is noted that the timely order of processes S7 and S8 could be vice versa, or both processes could be carried out at the same time.

Thus, in process S10, the TCE can correlate the positioning data and the MDT data based on the trace reference (TR) and the trace recording session reference (TSRS) parameters.

Fig. 3 shows a signalling diagram according to a second embodiment, which differs from the first embodiment in that the E-SMLC determines the location of the UE. In particular, in process S7A, the UE sends the positioning data including TR and TRSR to the E-SLMC, in step S7B the E-SLMC determines the location of the UE based on the positioning data received from the UE, and in step S7C, the E-SLMC sends location information for the UE to the centralized trace collection entity (TCE). Otherwise, the processes are the same as according to the first embodiment.

In this way, according to the second embodiment, the E-SMLC calculates final UE position in order to relieve the responsibility of the UE and to provide reliable positioning on time.

Thus, summarizing, according to the embodiments above, when positioning server initiates the positioning request to the mobile, it sends the trace reference (TR) and allocates a trace recording session reference (TRSR). The UE will send the TR and TRSR in the positioning data and in the MDT data, so that the positioning data and the MDT data can easily be correlated.

Hence, according to embodiments of the present invention, the results of the measurements can easily be handled. Namely, it is simpler and faster to compare an identifier (ID) such as TR and/or TRSR to correlate the MDT measurements with the position information than to compare the time of collection of MDT measurements and timestamp associated with the position information.

As described above, basically, the SMLC or E-SMLC gets involved as an independent procedure to acquire position data. The SMLC or E-SMLC receives the trace reference, and by combining the reference and position data, and the reference and MDT data, the position of the trace can be defined.

Hence, according to embodiments of the present invention, a fast and easy correlation possibility for the positioning data and MDT data is created, instead of having the comparison of timestamps.

That is, embodiments of the present invention describe a way how to correlate the positioning data received in LTE Positioning Protocol LPP and the MDT report received in radio resource control (RRC) in a fast an efficient way.

It is noted that some embodiments as described above are directed to LTE or LTE-A. However, LTE or LTE-A is only an example, and embodiments of the present invention may be applied on any radio access technology in which a measurement (e.g., concerning the condition in a network and/or coverage of the network) is carried out, in which also the location of mobile terminal carrying out corresponding measurements has to be known.

According to a first aspect of several examples of the invention, an apparatus is provided which comprises
a receiver configured to receive a position request including a trace session identification parameter (e.g., TR and/or TRSR as described above),
a controller configured to perform positioning of the apparatus and to collect measurement (e.g., MDT) data in response to the received position request including the trace session identification parameter, and
a sender configured to send the measurement data and positioning data including the trace session identification parameter.

The first aspect may be modified as follows:
The controller may be configured to determine a location of the apparatus and to include information about the location into the positioning data.

The trace session identification parameter may further include a trace recording session identification parameter.

The sender may be configured to send the measurement data and the positioning data including the trace session identification parameter to a network control element (e.g., TCE as described above).

The sender may be configured to send the measurement data including the trace session identification parameter to a network control element and to send the positioning data including the trace session identification parameter to a positioning server.

According to a second aspect of several examples of the invention, an apparatus is provided which comprises
a receiver configured to receive position information data comprising a trace session identification parameter, the position information data including information about the position of a mobile terminal, and measurement data comprising the trace session identification parameter, and
a controller configured to correlate the position information data with the measurement data based on the trace session identification parameter.

The second aspect may be modified such that the receiver may be configured to receive position information data comprising the trace session identification parameter from the mobile terminal or from a positioning server.

According to a third aspect of several examples of the invention, a method is provided which comprises
receiving position information data comprising a trace session identification parameter, the position information data including information about the position of a mobile terminal, and measurement data comprising the trace session identification parameter, and
correlating the position information data with the measurement data based on the trace session identification parameter.

The third aspect may be modified as follows:
The method may be carried out by a network control element (e.g., a trace collection entity)

The method may further comprise
receiving position information data comprising the trace session identification parameter from the mobile terminal or from a positioning server.

It is to be understood that any of the above modifications can be applied singly or in combination to the respective aspects and/or examples to which they refer, unless they are explicitly stated as excluding alternatives.

For the purpose of the present invention as described herein above, it should be noted that
- method steps likely to be implemented as software code portions and being run using a processor at a network element or terminal (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above, UE, eNode-B etc. as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined apparatuses, or any one of their respective means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

It is noted that the embodiments and examples described above are provided for illustrative purposes only and are in no way intended that the present invention is restricted thereto.

## Claims

1. A mobile terminal (3) comprising a receiver (31) configured to receive a position request including a trace session identification parameter and to receive a measurement configuration message,
a controller (32) configured to perform positioning of the mobile terminal and to collect measurement data in response to the received position request including the trace session identification parameter and in response to the received measurement configuration message respectively, and a sender (33) configured to send the measurement data and the positioning data both including the trace session identification parameter.

2. The mobile terminal according to claim 1, wherein the controller (31) is configured to determine a location of the mobile terminal and to include information about the location into the positioning data.

3. The mobile terminal according to claim 1 or 2, wherein the trace session identification parameter further includes a trace recording session identification parameter.

4. The mobile terminal according to any one of the claims 1 to 3, wherein
the sender (33) is configured to send the measurement data and the positioning data both including the trace session identification parameter to a network control element.

5. The mobile terminal according to any one of the claims 1 to 3, wherein
the sender (33) is configured to send the measurement data including the trace session identification parameter to a network control element and to send the positioning data including the trace session identification parameter to a positioning server (4).

6. A trace collection entity (4) comprising a receiver (41) configured to receive positioning data comprising a trace session identification parameter, the positioning data including information about the position of a mobile terminal (3), and to receive measurement data comprising the trace session identification parameter, and
a controller (42) configured to correlate the positioning data with the measurement data based on the trace session identification parameter, wherein the positioning data is correlated with the measurement data by a comparison of the trace session identification parameter included in the measurement data with the trace session identification parameter included in the positioning data.

7. The trace collection entity according to claim 6, wherein the receiver (41) is configured to receive the positioning data comprising the trace session identification parameter from the mobile terminal (3) or from a positioning server (2).

8. A method carried out in a mobile terminal (3), comprising receiving (S5) a position request including a trace session identification parameter and receiving a measurement configuration message,
performing (S6) positioning of the mobile terminal and collecting measurement data in response to the received position request including the trace session identification parameter and in response to the received measurement configuration message respectively, and
sending (S7, S8; S7A, S8) the measurement data and the positioning data both including the trace session identification parameter.

9. A method carried out in a trace collection entity (4), comprising
receiving (S9; S7C, S9) positioning data comprising a trace session identification parameter, the positioning data including information about the position of a mobile terminal (3), and receiving measurement data comprising the trace session identification parameter, and
correlating (S10) the positioning data with the measurement data based on the trace session identification parameter, wherein the positioning data is correlated with the measurement data by a comparison of the trace session identification parameter included in the measurement data with the trace session identification parameter included in the positioning data.

10. A computer program product comprising code means for performing a method according to claims 8 or 9 when run on a processor of a mobile terminal (3) or of a trace collection entity (4) respectively.

11. The computer program product according to claim 10, wherein the computer program product is embodied on a computer-readable medium.

## Patentansprüche

1. Mobiles Endgerät (3), umfassend
einen Empfänger (31), der konfiguriert ist, um eine Positionsanforderung, die einen Trace-Session-Identifizierungsparameter enthält, zu empfangen und eine Messkonfigurationsnachricht zu empfangen,
einen Controller (32), der konfiguriert ist, um eine Ortung des mobilen Endgeräts durchzuführen und Messdaten in Ansprechen auf die empfangene Positionsanforderung, die den Trace-Session-Identifizierungsparameter enthält, bzw. in Ansprechen auf die empfangene Messkonfigurationsnachricht zu erfassen, und
einen Sender (33), der konfiguriert ist, um die Messdaten und die Ortungsdaten, die beide den Trace-Session-Identifizierungsparameter enthalten, zu senden.

2. Mobiles Endgerät nach Anspruch 1, wobei der Controller (31) konfiguriert ist, um einen Standort des mobilen Endgeräts zu ermitteln und Informationen zum Standort in die Ortungsdaten aufzunehmen.

3. Mobiles Endgerät nach Anspruch 1 oder 2, wobei der Trace-Session-Identifizierungsparameter ferner einen Trace-Recording-Session-Identifizierungsparameter enthält.

4. Mobiles Endgerät nach einem der Ansprüche 1 bis 3, wobei
der Sender (33) konfiguriert ist, um die Messdaten und die Ortungsdaten, die beide den Trace-Session-Identifizierungsparameter enthalten, an ein Netzsteuerelement zu senden.

5. Mobiles Endgerät nach einem der Ansprüche 1 bis 3, wobei
der Sender (33) konfiguriert ist, um die Messdaten, die den Trace-Session-Identifizierungsparameter enthalten, an ein Netzsteuerelement zu senden und die Ortungsdaten, die den Trace-Session-Identifizierungsparameter enthalten, an einen Ortungsserver (4) zu senden.

6. Trace-Collection-Einheit (4), umfassend
einen Empfänger (41), der konfiguriert ist, um Ortungsdaten, die einen Trace-Session-Identifizierungsparameter umfassen, zu empfangen, wobei die Ortungsdaten Informationen zur Position eines mobilen Endgeräts (3) enthalten, und Messdaten, die den Trace-Session-Identifizierungsparameter umfassen, zu empfangen, und
einen Controller (42), der konfiguriert ist, um die Ortungsdaten mit den Messdaten basierend auf dem Trace-Session-Identifizierungsparameter zu korrelieren, wobei die Ortungsdaten durch einen Vergleich des Trace-Session-Identifizierungsparameters, der in den Messdaten enthalten ist, mit dem Trace-Session-Identifizierungsparameter, der in den Ortungsdaten enthalten ist, mit den Messdaten korreliert werden.

7. Trace-Collection-Einheit nach Anspruch 6,
wobei der Empfänger (41) konfiguriert ist, um die Ortungsdaten, die den Trace-Session-Identifizierungsparameter umfassen, vom mobilen Endgerät (3) oder von einem Ortungsserver (2) zu empfangen.

8. Verfahren, das in einem mobilen Endgerät (3) ausgeführt wird, umfassend
Empfangen (S5) einer Positionsanforderung, die einen Trace-Session-Identifizierungsparameter enthält, und Empfangen einer Messkonfigurationsnachricht,
Durchführen (S6) einer Ortung des mobilen Endgeräts und Erfassen von Messdaten in Ansprechen auf die empfangene Positionsanforderung, die den Trace-Session-Identifizierungsparameter enthält, bzw. in Ansprechen auf die empfangene Messkonfigurationsnachricht und
Senden (S7, S8; S7A, S8) der Messdaten und der Ortungsdaten, die beide den Trace-Session-Identifizierungsparameter enthalten.

9. Verfahren, das in einer Trace-Collection-Einheit (4) ausgeführt wird, umfassend
Empfangen (S9; S7C, S9) von Ortungsdaten, die einen Trace-Session-Identifizierungsparameter umfassen, wobei die Ortungsdaten Informationen zur Position eines mobilen Endgeräts (3) enthalten, und Empfangen von Messdaten, die den Trace-Session-Identifizierungsparameter umfassen, und
Korrelieren (S10) der Ortungsdaten mit den Messdaten basierend auf dem Trace-Session-Identifizierungsparameter, wobei die Ortungsdaten durch einen Vergleich des Trace-Session-Identifizierungsparameters, der in den Messdaten enthalten ist, mit dem Trace-Session-Identifizierungsparameter, der in den Ortungsdaten enthalten ist, mit den Messdaten korreliert werden.

10. Computerprogrammprodukt, das Codemittel zum Durchführen eines Verfahrens nach Anspruch 8 oder 9 durch Laufenlassen auf einem Prozessor eines mobilen Endgeräts (3) bzw. einer Trace-Collection-Einheit (4) umfasst.

11. Computerprogrammprodukt nach Anspruch 10, wobei das Computerprogrammprodukt in einem computerlesbaren Medium verkörpert ist.

## Revendications

1. Terminal mobile (3) comprenant :
un récepteur (31) configuré pour recevoir une demande de position comprenant un paramètre d'identification de session de traçage et pour recevoir un message de configuration de mesures,
un contrôleur (32) configuré pour exécuter un positionnement du terminal mobile et pour collecter des données de mesure en réponse à la demande de position reçue comprenant le paramètre d'identification de session de traçage et en réponse au message de configuration de mesures reçu respectivement, et
un expéditeur (33) configuré pour envoyer les données de mesure et les données de positionnement comprenant chacune le paramètre d'identification de session de traçage.

2. Terminal mobile selon la revendication 1, dans lequel le contrôleur (31) est configuré pour déterminer un emplacement du terminal mobile et pour comprendre des informations concernant l'emplacement dans les données de positionnement.

3. Terminal mobile selon la revendication 1 ou 2, dans lequel le paramètre d'identification de session de traçage comprend en outre un paramètre d'identification de session d'enregistrement de traçage.

4. Terminal mobile selon l'une quelconque des revendications 1 à 3, dans lequel
l'expéditeur (33) est configuré pour envoyer les données de mesure et les données de positionnement comprenant chacune le paramètre d'identification de session de traçage à un élément de commande de réseau.

5. Terminal mobile selon l'une quelconque des revendications 1 à 3, dans lequel
l'expéditeur (33) est configuré pour envoyer les données de mesure comprenant le paramètre d'identification de session de traçage à un élément de commande de réseau et pour envoyer les données de positionnement comprenant le paramètre d'identification de session de traçage à un serveur de positionnement (4).

6. Entité de collecte de traçage (4) comprenant
un récepteur (41) configuré pour recevoir des données de positionnement comprenant un paramètre d'identification de session de traçage, les données de positionnement comprenant des informations concernant la position d'un terminal mobile (3), et pour recevoir des données de mesure comprenant le paramètre d'identification de session de traçage, et
un contrôleur (42) configuré pour corréler les données de positionnement avec les données de mesure sur la base du paramètre d'identification de session de traçage, dans lequel les données de positionnement sont corrélées avec les données de mesure par une comparaison du paramètre d'identification de session de traçage compris dans les données de mesure avec le paramètre d'identification de session de traçage dans les données de positionnement.

7. Entité de collecte de traçage selon la revendication 6, dans lequel le récepteur (41) est configuré pour recevoir les données de positionnement comprenant le paramètre d'identification de session de traçage à partir du terminal mobile (3) ou à partir d'un serveur de positionnement (2).

8. Procédé mis en oeuvre dans un terminal mobile (3), comprenant
la réception (S5) d'une demande de position comprenant un paramètre d'identification de session de traçage et la réception d'un message de configuration de mesures,
l'exécution (S6) du positionnement du terminal mobile et la collecte des données de mesure en réponse à la demande de position reçue comprenant le paramètre d'identification de session de traçage et en réponse au message de configuration de mesure reçu respectivement, et
l'envoi (S7, S8 ; S7A, S8) des données de mesure et des données de positionnement comprenant chacune le paramètre d'identification de session de traçage.

9. Procédé mis en oeuvre dans une entité de collecte de traçage (4), comprenant :
la réception (S9 ; S7C, S9) des données de positionnement comprenant un paramètre d'identification de session de traçage, les données de positionnement comprenant des informations concernant la position d'un terminal mobile (3), et la réception de données de mesure comprenant le paramètre d'identification de session de traçage, et
la corrélation (S10) des données de positionnement avec les données de mesure sur la base du paramètre d'identification de session de traçage, dans lequel les données de positionnement sont corrélées avec les données de mesure par une comparaison du paramètre d'identification de session de traçage compris dans les données de mesure avec le paramètre d'identification de session de traçage compris dans les données de positionnement.

10. Produit de programme informatique comprenant un moyen de code permettant de mettre en oeuvre un procédé selon les revendications 8 ou 9 lorsqu'il est exécuté sur un processeur d'un terminal mobile (3) ou d'une entité de collecte de traçage (4) respectivement.

11. Produit de programme informatique selon la revendication 10, dans lequel le produit de programme informatique est mis en oeuvre sur un support lisible par ordinateur.
